# EUROPEAN PATENT APPLICATION

(11) **EP 4 745 858 A1**
(43) Date of publication of application: **20.05.2026**
(21) Application number: 23947629.4
(22) Date of filing: 02.08.2023
(51) Int. Cl.: G06Q 10/083

(54) **CARBON DIOXIDE EMISSION AMOUNT CALCULATION METHOD, CARBON DIOXIDE EMISSION AMOUNT CALCULATION SYSTEM, AND PROGRAM**

(71) Applicant: LOGISTEED, Ltd., Tokyo 104-0031 (JP)
(72) Inventor: HANZAWA, Yasuhiro, Tokyo 104-8350 (JP); HIRAMACHI, Kei, Tokyo 104-8350 (JP)
(74) Representative: Isern Patentes y Marcas S.L.
(86) International application number: PCT/JP2023/028318
(87) International publication number: WO 2025/027832

(57) **Abstract**

[Problem]To provide a carbon dioxide emission amount calculation method, a carbon dioxide emission amount calculation system, and a program capable of calculating, in a short time, a carbon dioxide emission amount without a load of route setting or the like. [Solution] Provided is a carbon dioxide emission amount calculation method executed by a carbon dioxide emission amount calculation system that calculates a carbon dioxide emission amount emitted from a transport means for luggage, the method comprising: a step of managing delivery data relating to the luggage; a step of acquiring transport site information relating to at least two transport sites relating to the transport of luggage from the delivery data relating to luggage acquired from a management system and converting the acquired transport site information to latitude and longitude information relating to the transport sites; a step of determining a transport route between the at least two transport sites on the basis of the latitude and longitude information relating to the transport sites obtained through the conversion; and a step of calculating the transport distance of the determined transport route on the basis of the determined transport route and calculating, on the basis of the calculated transport distance, a carbon dioxide emission amount that emitted from a transport means for the luggage operating on the transport route.

## Description

### TECHNICAL FIELD

The present disclosure relates to a technology that is useful for calculating carbon dioxide emissions from a transportation means for an item.

### BACKGROUND ART

The reduction of carbon dioxide that is greenhouse gas is required in corporate activity. For logistics, the carbon dioxide that can be generated by corporate activity such as logistics is also required to be efficiently calculated. For example, like Non-Patent Document 1, a method has been devised to calculate the carbon dioxide emissions by using the fuel economy method based on the transport distance of a vehicle transporting a cargo.

### DOCUMENT IN THE EXISTING ART

### Non-patent document

Non-Patent Document 1: JP 3238695 Y

### SUMMARY

### The technical problem solved by the disclosure

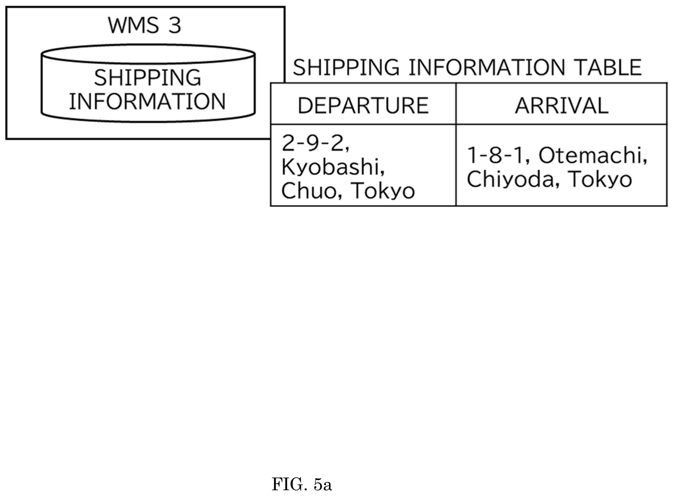

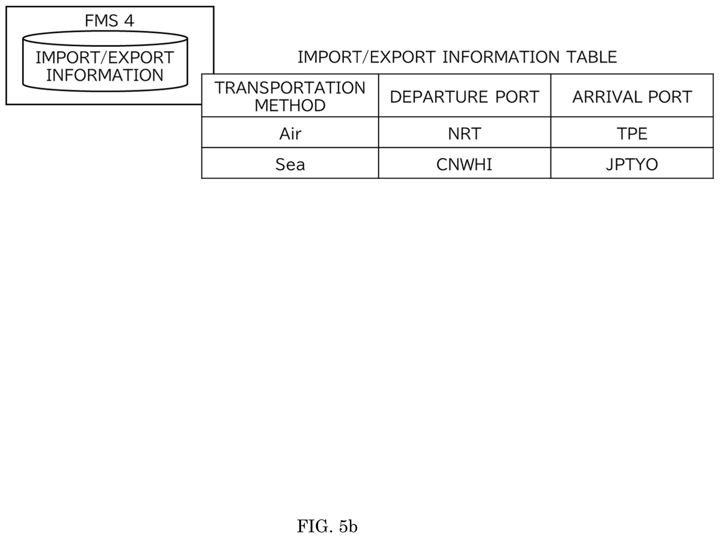

The technology in Non-Patent Document 1 calculates carbon dioxide emissions by using the fuel economy method based on the route taken by a truck, etc., to transport a cargo from the shipping origin to the shipping destination. However, in this document, a worker must previously and manually set the shipping base, the delivery base, and the one-way distance as the route setting work, which must be made each time a new shipping or delivery base is added. Therefore, as the delivery volume increases, the burden of this setting work increases. This route setting work may become practically difficult (see [0035] - [0040], Fig. 5).

Another method for setting a transportation route is to use a so-called car navigation system to store the route actually traveled by a truck, etc., and use this as a transportation route. However, in such a method, data on a route change based on the driver's judgment according to an actual road condition is also subject to the calculation of transportation distance, and the calculation of carbon dioxide emissions may take more time due to the increased calculation volume when the delivery volume increases.

An objective of the present disclosure is to provide a method, a system, and a program for calculating carbon dioxide emissions that can calculate the carbon dioxide emissions in a short time without the burden of setting a route.

### Solution for solving the technical problem

The present disclosure provides a method for calculating carbon dioxide emissions executed by a system for calculating carbon dioxide emissions from a transportation means for an item, including the steps of:
managing shipping data for an item;
acquiring transportation base information on at least two transportation bases related to transportation of the item from the shipping data of the item that is acquired from a management system and converting the acquired transportation base information into latitude and longitude information of the transportation bases;
determining a transportation route between the at least two transportation bases based on the converted latitude and longitude information of the transportation bases; and
calculating a transportation distance of the transportation route based on the determined transportation route and calculating carbon dioxide emissions from the transportation means for an item based on the calculated transportation distance, the transportation means operating on the transportation route.

According to the present disclosure, the shipping data of an item obtained from the management system is used, and the predetermined transportation route is determined from the coordinates between at least two points included in this shipping data. Therefore, the time required to input the data required to determine a transportation route can be reduced while the amount of data required to determine a transportation route can be reduced, and the calculation of carbon dioxide emissions can be shortened.

Although the present disclosure is in the category of a method, the same category-specific actions and effects are achieved even in a system and a program.

### Technical effect

The present disclosure can calculate carbon the dioxide emissions in a short time without the burden of setting a route.

### BRIEF DESCRIPTION OF THE DRAWINGS

Fig. 1 illustrates an overview of the carbon dioxide emissions calculation system 1. (1a) is an overview of the entire system, (1b) is an extracted view of the map computer 5, and (1c) is an extracted view of the carbon dioxide emissions calculation computer 10.
Fig. 2 shows the instruction structure of the carbon dioxide emissions calculation system 1.
Fig. 3 shows a flowchart of the process of calculating carbon dioxide emissions from a transportation means for an item, which is performed by the carbon dioxide emissions calculation system 1.
Fig. 4 shows a flowchart of the shipping data output process performed by the carbon dioxide emissions calculation system 1.
Fig. 5 shows an example of shipping data output by the management system 2, (5a) schematically shows the shipping information table stored by WMS 3, and (5b) schematically shows the import/export information table stored by FMS 4.
Fig. 6 shows a flowchart of the process for converting into latitude and longitude information of a transportation base and the process of determining a transportation route based on this latitude and longitude information, which are performed by the carbon dioxide emissions calculation system 1.
Fig. 7 shows a flowchart of the process of calculating transportation distance based on the determined transportation route and the process of calculating carbon dioxide emissions from a transportation means, which are performed by the carbon dioxide emissions calculation system 1.
Fig. 8 schematically shows the address master stored in the carbon dioxide emissions calculation computer 10.
Fig. 9 schematically shows map information, coordinates based on the latitude and longitude information of transportation base information, and carbon dioxide emissions that are displayed by the carbon dioxide emissions calculation computer 10

### DETAILED DESCRIPTION OF THE EMBODIMENTS

An embodiment for carrying out the present disclosure (hereinafter referred to as "Embodiment") is explained in detail below with reference to the attached drawings. In the drawings, the same elements throughout the description of Embodiment are designated by the same reference numerals.

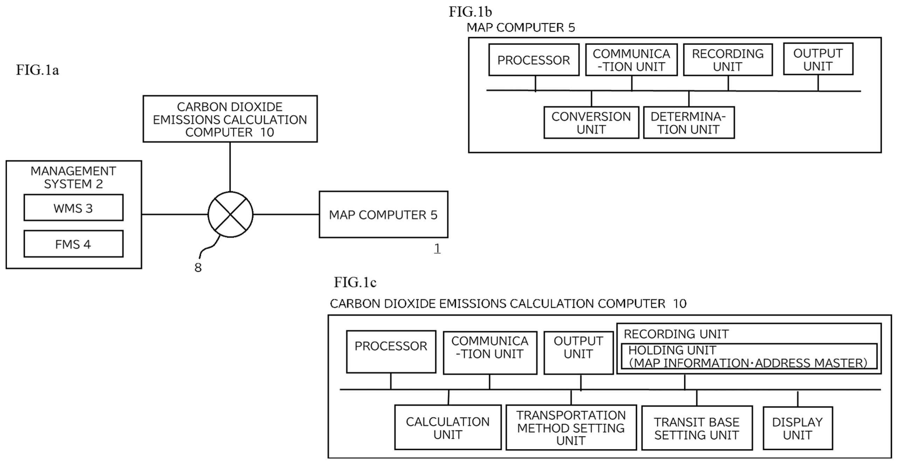

Fig. 1a is a block diagram illustrating an overview of the carbon dioxide emissions calculation system 1. Fig. 1b illustrates the map computer 5. Fig. 1c illustrates the carbon dioxide emissions calculation computer 10.

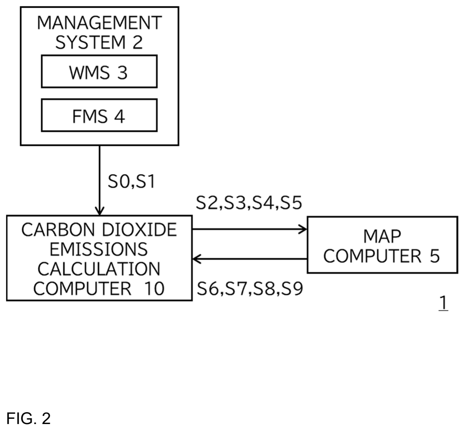

Fig. 2 illustrates an overview of the instruction structure of the carbon dioxide emissions calculation system 1.

The components of the carbon dioxide emissions calculation system 1 is described below with reference to Figs. 1 and 2.

The carbon dioxide emissions calculation system 1 is a system that calculates carbon dioxide emissions from a transportation means for an item (e.g., a vehicle such as a truck, a railroad such as a freight car, a ship such as a cargo ship or a ferry, an airplane), which is provided with a management system 2, a map computer 5, and a carbon dioxide emissions calculation computer 10.

The management system 2 includes WMS (Warehouse Management System) 3 and FMS (Fleet management system) 4. WMS 3 is a system with functions such as receiving/shipping management and inventory control for a general warehouse. WMS 3 manages shipping information (e.g., departure address, arrival address) on an item. FMS 4 is a system that has the function of managing the operation of a freight automotive vehicle. FMS 4 manages the import/export information on an item (e.g., transportation method, the names of the departure port and the arrival port).

The map computer 5 includes, for example, a processor; a communication unit; a recording unit that stores map information, etc.; an output unit that outputs a signal, etc.; a conversion unit that converts information on a transportation base related to transportation of an item into latitude and longitude information of the transportation bases; and a determination unit that determines a transportation route between transportation bases, which may be realized by one computer or by multiple computers making up a cloud computer. The cloud computer herein may be any computer that is used in a scalable manner to perform a specific function or may include multiple functional modules and freely combine their functions to realize a certain system.

The map computer 5 includes a data storage unit such as a hard disk, a semiconductor memory, a recording media, or a memory card as a recording unit.

The map computer 5 includes various devices that perform various processes as a processor.

The carbon dioxide emissions calculation computer 10 includes, for example, a processor; a communication unit; an output unit that outputs a signal, etc.; a recording unit that has a holding unit that stores an address master including map information, address information, a port code, latitude and longitude information; a calculation unit that calculating transportation distance based on a transportation route and calculates the amount of carbon dioxide emitted from a transportation means for an item that operates on the transportation route based on the transportation distance; a transportation method setting unit that sets a transportation method based on the transportation base information; a transit base setting unit that sets a transit base from the transportation base information according to the transportation method; and a display unit that displays coordinates based on the latitude and longitude information of the transportation bases in the map information and displays the carbon dioxide emissions from delivery of the transportation base, which may be realized by one computer or by multiple computers making up a cloud computer.

The carbon dioxide emissions calculation computer 10 includes a data storage unit such as a hard disk, a semiconductor memory, a recording media, or a memory card as the recording unit.

The carbon dioxide emissions calculation computer 10 includes various devices to perform various processes as a processor.

The carbon dioxide emissions calculation computer 10 is connected to the management system 2 and the map computer 5 through a network 8.

### Device Configuration

As shown in Fig. 1, the carbon dioxide emissions calculation system 1 is a system for calculating carbon dioxide emissions from a transportation means for an item, and at least the carbon dioxide emissions calculation computer 10 is data-communicatively connected to each of the management system 2 and the map computer 5 through a network 8 such as a public line network or an intranet.

The components of the carbon dioxide emissions calculation system 1 are examples only, and the number, the types, and the functions of terminals, devices, etc., (of a customer's core system) not shown in the attached drawings can be changed as needed.

The map computer 5 includes a CPU (Central Processing Unit), a GPU (Graphics Processing Unit), a RAM (Random Access Memory), a ROM (Read Only Memory) in the processor; and a device enabling communication with other terminals and devices as the communication unit.

The carbon dioxide emissions calculation computer 10 includes a CPU, a GPU, a RAM, a ROM in the processor; and a device enabling communication with other terminals and devices as the communication unit.

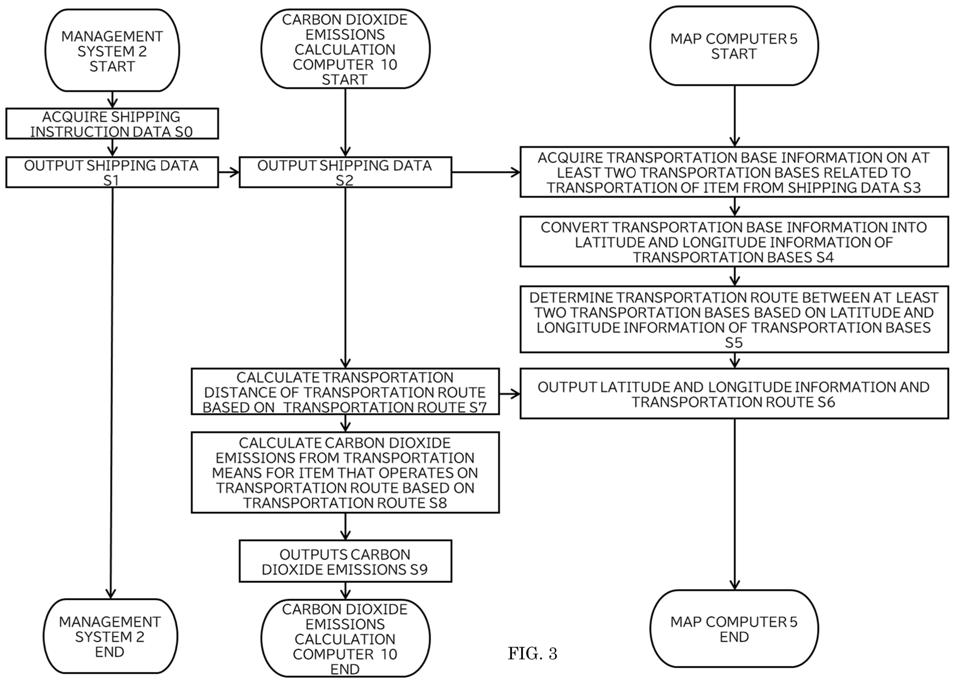

The overview of the process steps of calculating carbon dioxide emissions from a transportation means for an item, which is performed by the carbon dioxide emissions calculation system 1, is described below with reference to Figs. 2 and 3.

The management system 2 acquires shipping instruction data (Step S0).

The shipping instruction data is information about an item instructed to be shipped from a commercial warehouse by a consignor, which includes, for example, item information such as the identifier of an item (e.g., name, type, management ID), the quantity, the shipping date and time, the identifier of the storage location (e.g., the management number of a storage shelf); consignor information such as the name of a consignor, the identifier of a commercial warehouse in which an item is put (e.g., name, management ID), the identifier of a store as a shipping destination (e.g., name, management ID); and transportation base information that enables identification of a transport base, such as the identifier of a shipping origin (e.g., address, name, telephone number), the identifier of a shipping destination (e.g., address, name, telephone number), the identifier of a transit base (e.g., address, name, telephone number), and an item transportation method (e.g., a vehicle such as a truck, a railway such as a freight train, a vessel, a plane). The consignor information only has to include at least one of the name of a consignor, a warehouse in which an item is put, and a store as a shipping destination.

The management system 2 acquires this shipping instruction data from a customer's core system (not shown).

The management system 2 outputs shipping data to the carbon dioxide emissions calculation computer 10 (Step S1).

In the management system 2, WMS 3 transmits the transportation base information (the identifiers of a shipping origin, a shipping destination, and a transit base) of an item instructed to be shipped based on the shipping instruction data to the carbon dioxide emissions calculation computer 10 as shipping data, and FMS 4 transmits the transportation base information (a transportation method, the identifiers of a shipping origin, a shipping destination, and a transit base) of an item instructed to be shipped based on the shipping instruction data, to the carbon dioxide emissions calculation computer 10 as shipping data. In other words, the shipping data output from the management system 2 is transportation base information on an item, including the identifiers of a shipping origin, a shipping destination, and a transit base.

The transportation base information only has to include information on at least two of a shipping origin, a shipping destination, and a transit base.

The management system 2 outputs shipping data to the carbon dioxide emissions calculation computer 10.

The carbon dioxide emissions calculation computer 10 acquires this shipping data from the management system 2.

The carbon dioxide emissions calculation computer 10 outputs shipping data to the map computer 5 (Step S2).

The carbon dioxide emissions calculation computer 10 checks whether or not there is information on a transportation method and the identifier of a transit base in the acquired shipping data. If there is no information, the carbon dioxide emissions calculation computer 10 sets an appropriate transportation method (the shortest distance or the shortest transportation time) and an appropriate transit base from the transportation base information in the shipping data.

The carbon dioxide emissions calculation computer 10 outputs this shipping data to the map computer 5.

The map computer 5 acquires this shipping data from the carbon dioxide emissions calculation computer 10.

The map computer 5 acquires transportation base information on at least two transportation bases related to transportation of the item from the shipping data (Step S3).

The map computer 5 acquires this transportation base information in association with the consignor information from the shipping instruction data in which the consignor instructs shipping. The map computer 5 acquires at least two of the transportation base information in the shipping data. For example, when the consignor A has instructed the delivery of an item, the map computer 5 acquires at least two of the transportation base information in the shipping data output from the management system 2 based on the shipping instruction data in which the consignor A has instructed shipping, in association with the consignor information of the consignor A. The map computer 5 acquires information on at least two of the shipping origin, the shipping destination, and the transit base in the transportation base information.

As the result, the map computer 5 associates the consignor information with the transportation base information on at least two transportation bases.

The map computer 5 converts the acquired transportation base information into latitude and longitude information of the transportation bases (Step S4).

The map computer 5, for example, normalizes the identifier of the address of the transportation base based on the acquired transportation base information (corrects misspellings, omissions, name errors, incomplete entries, hiragana/katakana, mixed kanji/kana, old addresses, local street names, etc.) and converts the identifier of the address of the transportation base into latitude and longitude information. The map computer 5 previously holds a conversion table, etc., between an address identifier and latitude and longitude information and uses this conversion table to convert the address identifier in the transportation base information acquired at this time into latitude and longitude information.

The map computer 5 determines a transportation route between the at least two transportation bases based on the converted latitude and longitude information of the transportation bases (Step S5).

The map computer 5 determines a transportation route between the at least two transportation bases of the shipping origin, the shipping destination, and the transit base based on the converted latitude and longitude information of the transportation bases. The map computer 5 also determines a transportation route between the departure port and the arrival port based on the transportation method.

The map computer 5 outputs the converted latitude and longitude information and the determined transportation route to the carbon dioxide emissions calculation computer 10 (Step S6).

The map computer 5 outputs the latitude and longitude information and the transportation route to the carbon dioxide emissions calculation computer 10.

The carbon dioxide emissions calculation computer 10 acquires the latitude and longitude information and the transportation route from the map computer 5.

The carbon dioxide emissions calculation computer 10 calculates the transportation distance of the transportation route based on the determined transportation route (Step S7).

The carbon dioxide emissions calculation computer 10 calculates the transportation distance of the transportation route based on this transportation route

The carbon dioxide emissions calculation computer 10 calculates the carbon dioxide emissions from a transportation means for an item that operates on the transportation route, based on the calculated transportation route (Step S8).

The carbon dioxide emissions calculation computer 10 uses the predetermined carbon dioxide emissions calculation methods (e.g., fuel method, fuel economy method, improved ton-kilometer method, conventional ton-kilometer method) to calculate carbon dioxide emissions from the transportation means for an item. The carbon dioxide emissions calculation computer 10 only has to use the improved ton-kilometer method if the transportation means is a vehicle such as a truck and use the conventional ton-kilometer method if the transportation means is a rail, a vessel, or an airplane.

The carbon dioxide emissions calculation computer 10 outputs the calculated carbon dioxide emissions (Step S9).

The carbon dioxide emissions calculation computer 10 outputs the calculated carbon dioxide emissions to the customer's core system (not shown).

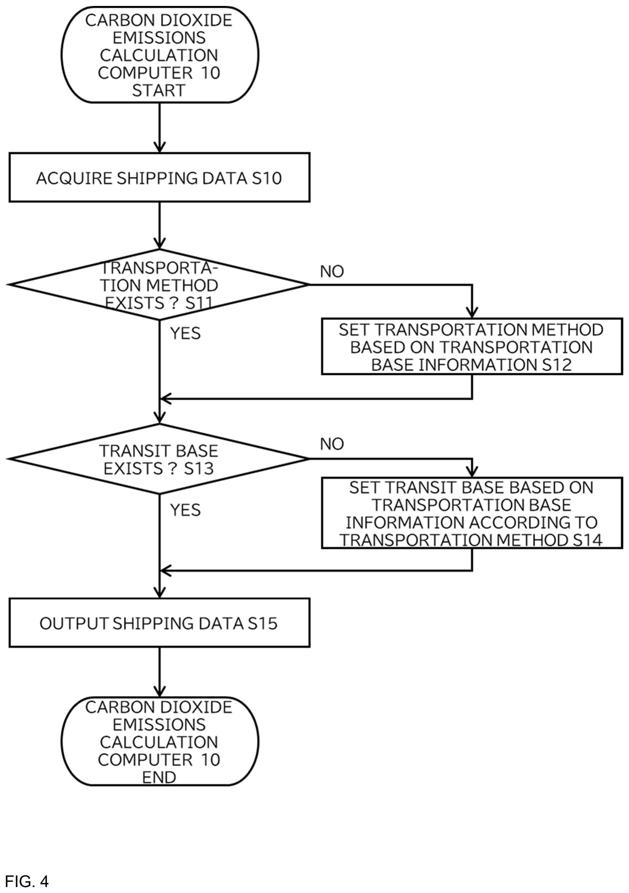

The overview of the process steps of outputting the shipping data in Step S2 performed by the carbon dioxide emissions calculation system 1 is described below with reference to Figs. 4 and 5.

The carbon dioxide emissions calculation computer 10 acquires shipping data (Step S10).

The carbon dioxide emissions calculation computer 10 acquires shipping data output from the management system 2.

The shipping data output from the management system 2 is output from either WMS 3 or FMS 4. WMS 3 stores a shipping information table (see Fig. 5a) in which the identifier of a shipping origin of an item (departure identifier) and the identifier of the shipping destination of an item (arrival identifier) are registered and outputs the identifiers of the shipping origin and the shipping destination, which correspond to an item instructed to be shipped based on the shipping instruction data acquired from the core system, to the carbon dioxide emissions calculation computer 10 as shipping data. FMS 4 stores an import/export information table (see Fig. 5b) in which an identifier of the transportation method for an item (transportation method identifier), the identifier of the shipping origin of an item (departure port identifier), and an identifier of the shipping destination of an item (arrival port identifier) are registered and outputs the identifiers of the transportation method, the shipping origin, and the shipping destination of the item instructed to be shipped based on the shipping instruction data acquired from the core system to the carbon dioxide emissions calculation computer 10 as shipping data. In the shipping information table and the import/export information table, the identifier of a transit base may be registered. In this case, WMS 3 outputs the identifiers of the shipping origin, the shipping destination, and the transit base as shipping data, and FMS 4 outputs the identifiers of the transportation method, the shipping origin, the shipping destination, and the transit base as shipping data.

The carbon dioxide emissions calculation computer 10 determines whether or not a transportation method exists in the acquired shipping data (Step S11).

The carbon dioxide emissions calculation computer 10 determines whether or not the acquired shipping data includes an identifier of the transportation method.

If the carbon dioxide emissions calculation computer 10 determines that no transportation method exists (Step S11 NO), the carbon dioxide emissions calculation computer 10 sets a transportation method based on the transportation base information by the transportation method setting unit (Step S12).

The transportation method setting unit sets a transportation method that can achieve the shortest distance or the shortest transportation time based on the distance between the transportation bases, the addresses thereof, etc. The method by which the transportation method setting unit sets a transportation method can be designed as needed.

The carbon dioxide emissions calculation computer 10 performs the Step S13 described later after setting a transportation method.

If the carbon dioxide emissions calculation computer 10 determines that a transportation method exists (Step S11 YES), the carbon dioxide emissions calculation computer 10 determines whether or not a transit base exists in the acquired shipping data (Step S13).

The carbon dioxide emissions calculation computer 10 determines whether or not the acquired shipping data includes an identifier of the transit base.

If the carbon dioxide emissions calculation computer 10 determines that no transit base exists (Step S13 NO), the carbon dioxide emissions calculation computer 10 sets a transit base based on the transportation base information according to the transportation method by the transit base setting unit (Step S14).

The transit base setting unit sets a transit base according to the transportation method existing in the shipping data or the set transportation method. Specifically, for example, if the transportation method is a vehicle, the transit base setting unit sets a location that satisfies the predetermined condition (e.g., a location at a predetermined distance from the shipping origin and the shipping destination) as a transit base. If the transportation method is a rail, the transit base setting unit sets a location that satisfies the predetermined condition (e.g., a location near the location, etc., at a predetermined distance from the shipping origin and the shipping destination). Similarly, even in the case of a vessel or an airplane, a location that satisfies the predetermined condition is set as a transit base. The method by which the transit base setting unit sets a transit base can be designed as needed.

The carbon dioxide emissions calculation computer 10 performs the process of the Step S15 described later after setting a transit base.

If the carbon dioxide emissions calculation computer 10 determines that a transit base exists (Step S13 YES), the carbon dioxide emissions calculation computer 10 outputs the shipping data to the map computer 5 (Step S15).

The carbon dioxide emissions calculation computer 10 outputs the shipping data acquired from the management system 2 to the map computer 5. At this point, the shipping data output from the carbon dioxide emissions calculation computer 10 is the data in which the transportation method and the transit base are set if a transportation method or a transit base does not exist in the original shipping data or the original data if a transportation method and a transit base exists in the original shipping data.

The above is the overview of the process steps of outputting the shipping data in Step S2 performed by the carbon dioxide emissions calculation system 1.

The carbon dioxide emissions calculation computer 10 acquires the shipping data from the management system 2 but may acquire it directly from the core system.

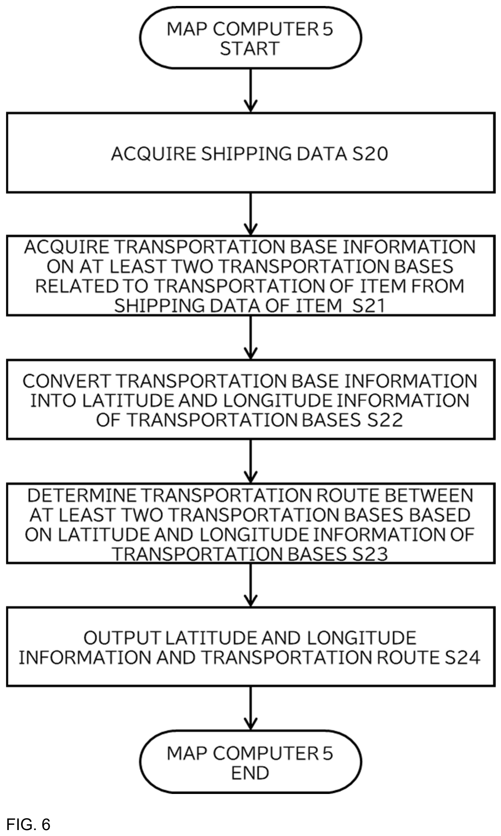

The overview of the process steps of converting into longitude and latitude information of a transportation base and determining a transportation route based on this longitude and latitude information in Steps S3 to S6 performed by the carbon dioxide emissions calculation system 1 is described below with reference to Fig 6.

The map computer 5 acquires shipping data (Step S20).

The map computer 5 acquires the shipping data from the carbon dioxide emissions calculation computer 10. Specifically, the map computer 5 acquires the shipping data itself output from the management system 2 or the shipping data in which a transportation method or a transit base is set, through the carbon dioxide emissions calculation computer 10.

The map computer 5 acquires transportation base information on at least two transportation bases related to transportation of the item from the shipping data of the item by the conversion unit (Step S21).

The conversion unit acquires this transportation base information in association with the consignor information (at least one information of the name of a consignor, a warehouse in which an item is put, or a store as a shipping destination) from the shipping instruction data in which the consignor instructs shipping. For example, when the consignor A has instructed the delivery of an item, the map computer 5 acquires at least two of the transportation base information in the shipping data acquired from the management system 2 through the carbon dioxide emissions calculation computer 10 based on the shipping instruction data in which the consignor A has instructed shipping, in association with the consignor information of the consignor A. The conversion unit acquires information on at least two of the shipping origin, the shipping destination, and the transit base in the transportation base information based on the acquired shipping data.

The conversion unit extracts and acquires information on at least two of the shipping origin, the shipping destination, and the transit base in the shipping data. The conversion unit extracts transportation base information on at least two transportation bases based on the predetermined condition (e.g., the transportation method, whether or not the transportation is domestic only, whether or not the transportation is international, or whether or not the original shipping data includes a transit base). For example, if the transportation method is a vehicle, the conversion unit extracts at least the shipping origin and the shipping destination. If the original shipping data includes a transit base, the conversion unit extracts the shipping origin and/or the shipping destination, including at least the transit base.

The map computer 5 converts the acquired transportation base information into latitude and longitude information of the transportation bases by the conversion unit (Step S22).

The map computer 5, for example, normalizes the identifier of the address of the transportation base information based on the acquired transportation base information (corrects misspellings, omissions, name errors, incomplete entries, hiragana/katakana, mixed kanji/kana, old addresses, local street names, etc.) and converts the identifier of the address of the transportation base into latitude and longitude information. The map computer 5 previously holds a conversion table, etc., between an address identifier and latitude and longitude information and uses this conversion table to convert the address identifiers in the transportation base information of at least two transportation bases that has been acquired at this time into latitude and longitude information. The method of converting the transportation base information into latitude and longitude information of the transportation bases by the map computer 5 can be designed as needed.

The map computer 5 determines a transportation route between the at least two transportation bases based on the converted latitude and longitude information of the transportation bases by the determination unit (Step S23).

The determination unit determines a transportation route between the at least two transportation bases of the shipping origin, the shipping destination, and the transit base based on the converted latitude and longitude information of the transportation bases. The map computer 5 also determines a transportation route between the departure port and the arrival port based on the transportation method.

The map computer 5 outputs the converted latitude and longitude information and the determined transportation route (Step S24).

The map computer 5 outputs the latitude and longitude information and the transportation route to the carbon dioxide emissions calculation computer 10.

The above is the overview of the process steps of converting into longitude and latitude information of a transportation base and determining a transportation route based on this longitude and latitude information in Steps S3 to S6 performed by the carbon dioxide emissions calculation system 1.

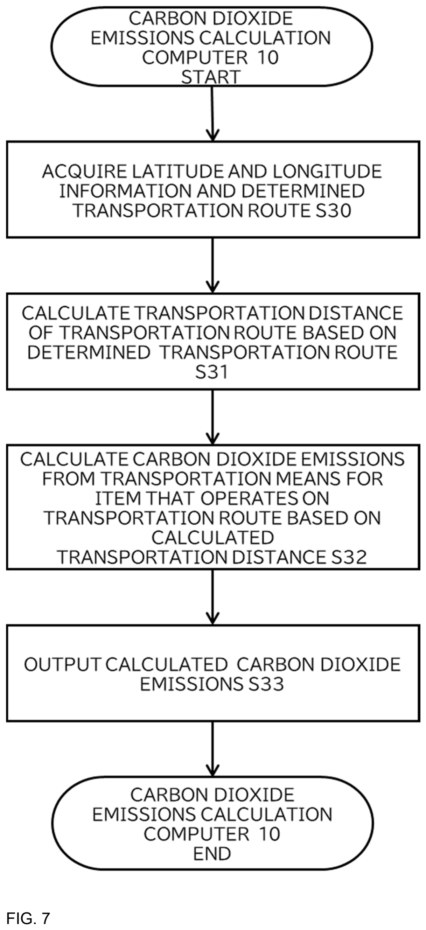

The overview of the process steps of calculating the transportation distance based on the determined transportation route and calculating carbon dioxide emissions from a transportation means for an item, which is performed in Steps S7 to S9 by the carbon dioxide emissions calculation system 1 is described below with reference to Figs. 7 to 9.

The carbon dioxide emissions calculation computer 10 acquires the converted latitude and longitude information and the determined transportation route (Step S30).

The carbon dioxide emissions calculation computer 10 acquires the latitude and longitude information and the transportation route from the map computer 5.

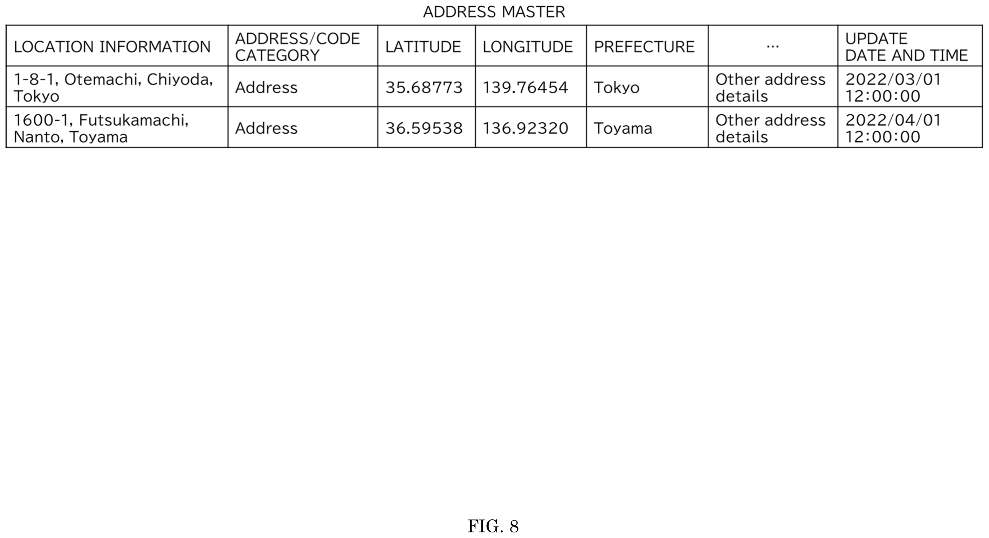

The carbon dioxide emissions calculation computer 10 holds the latitude and longitude information of the transportation bases converted by the conversion unit in the holding unit. The holding unit holds this latitude and longitude information as an address master (see Fig. 8).

The latitude and longitude information held by the holding unit is held as the address master. This address master has each information such as address information (e.g., address identifier, base classification, address detail information) after normalization, a port code, latitude and longitude information, and an update date and time. The latitude and longitude information is five-digit numbers that are sufficient to be used in the calculation of the transport distance, which is described later.

If the holding unit acquires new latitude and longitude information already existing in the address master, the holding unit maintains the existing information. If the holding unit acquires new latitude and longitude information not existing in the address master, the holding unit adds the information to the address master together with address information, etc.

The carbon dioxide emissions calculation computer 10 calculates the transportation distance of the transportation route based on the determined transportation route by the calculation unit (Step S31).

The calculation unit calculates the distance of the transportation route on the map information as the transportation distance.

The carbon dioxide emissions calculation computer 10 calculates the carbon dioxide emissions from a transportation means for an item that operates on the transportation route, based on the calculated transportation distance by the calculation unit (Step S32).

The calculation unit uses the predetermined carbon dioxide emissions calculation methods (e.g., fuel method, fuel economy method, improved ton-kilometer method, conventional ton-kilometer method) to calculate carbon dioxide emissions from a transportation means for an item. In this embodiment, the calculation unit uses the improved ton-kilometer method if the transportation means is a vehicle such as a truck and uses the conventional ton-kilometer method if the transportation means is a rail, a vessel, or an airplane.

The formula used by the calculation unit to calculate the carbon dioxide emissions by the improved ton-kilometer method is briefly described below. The calculation unit calculates carbon dioxide emissions by using the formula: transportation ton-kilometer (transportation weight (t) × transportation distance (km)) × improved ton-kilometer method principle unit (l/t·km) × carbon dioxide emissions factor (kg-CO₂/l). The improved ton-kilometer principle units for a gasoline vehicle and for a diesel vehicle are calculated by the formula EXP (2.67 - 0.927 × LN (x) - 0.648 × LN (z)) and the formula EXP (2.71 -0.812 × LN (x) - 0.654 × LN (z)), respectively. In the formulas, x is the loading rate (0 to 1), and z is the maximum loading capacity (kg).

The formula used by the calculation unit to calculate carbon dioxide emissions by the conventional ton-kilometer method is briefly described below. The calculation unit calculates carbon dioxide emissions by using the formula: transportation ton-kilometer (transportation weight (t) × transportation distance (km)) × conventional ton-kilometer method principle unit (g-CO₂/ t·km)/ 1,000.

The reason why the calculation unit uses such formulas is that it is difficult to calculate carbon dioxide emissions by using the fuel method or the fuel consumption method which requires identification by trip unit, in the case of shipping data that cannot be managed by linking an item to a trip. Therefore, to visualize carbon dioxide emissions, it is considered realistic to use the improved/conventional ton-kilometer method.

The present disclosure is applicable even if the calculation unit is configured to calculate carbon dioxide emissions by using the fuel method or the fuel consumption method instead of the improved/conventional ton-kilometer method.

The calculation unit calculates carbon dioxide emissions for each consignor information and aggregates the calculated carbon dioxide emissions for each consignor.

As the result, if a transportation method and a transportation base exist in the original shipping data, the calculation unit calculates carbon dioxide emissions based on the original transportation method and transportation base. If a transportation method or a transit base does not exist in the original shipping data, the calculation unit calculates carbon dioxide emissions based on the set transportation method and transportation base.

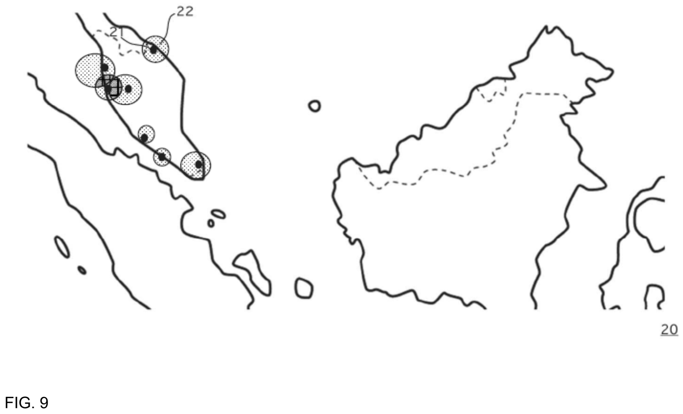

The carbon dioxide emissions calculation computer 10 displays map information, coordinates based on the latitude and longitude information of the transportation base and displays carbon dioxide emissions from delivery of the transportation base near the coordinates on the display unit (see Fig. 9).

The map information and the latitude and longitude information displayed by the display unit are held by the holding unit. The map information only has to be a general Japanese or world map.

The display section displays coordinates 21 based on the latitude and longitude information of the transportation bases on the map information 20. In Fig. 9, the coordinates 21 are indicated by black circles, one of which present on the map information 20 has a reference numeral. The coordinates 21 are shown at the location on the map information 20 that corresponds to the latitude and longitude information of the transportation bases. The coordinates 21 can be displayed on any of the shipping origins, the shipping destinations, and the transit bases. The display format of the coordinates 21 is not limited to black circles, which may be the identifiers, other symbols, character strings, etc. of the transportation bases and can be changed as needed.

The display unit shows the calculated carbon dioxide emissions 22 near the coordinates 21. In Fig. 9, the carbon dioxide emissions 22 are indicated by circles, one of which present on the map information 20 has a reference numeral. The display unit shows the carbon dioxide emissions 22 by the areas of the circles. This shows that the larger the area of the circle, the larger the carbon dioxide emissions 22. The circles each have a predetermined radius for the carbon dioxide emissions 22. As the result, the area of the circle increases as carbon dioxide emissions increase. The display format of the carbon dioxide emissions 22 is not limited to symbols such as circles, which may be numbers, other symbols, or character strings, etc. and can be changed as needed.

The carbon dioxide emissions displayed by the display unit may be aggregated for each consignor or calculated for each item.

The carbon dioxide emissions calculation computer 10 outputs the calculated carbon dioxide emissions (Step S33).

The carbon dioxide emissions calculation computer 10 outputs the calculated carbon dioxide emissions to the customer's core system.

The above is the overview of the process steps of calculating the transportation distance based on the determined transportation route and calculating carbon dioxide emissions from a transportation means for an item, which is performed in Steps S7 to S9 by the carbon dioxide emissions calculation system 1.

The above is the overview of the carbon dioxide emissions calculation system 1.

According to the carbon dioxide emissions calculation system 1, the time required to input the data required to determine a transportation routes can be reduced while the amount of data required to determine a transportation route can be reduced, and the calculation of carbon dioxide emissions can be shortened.

The above-mentioned means and functions are realized by a computer (including a CPU, an information processing device, and various terminals) reading and executing a predetermined program. The program may be a form, for example, provided from a computer through a network (SaaS: Software as a Service) or a cloud service. The program may also be provided recorded in a computer-readable recording medium. In this case, a computer reads a program from the recording medium and transfers it to an internal or an external recording device for recording and execution. The program may also be previously recorded in a recording device (recording medium) and provided from the recording device to a computer through a communication line.

Although the embodiments of the present disclosure have been described above, the present disclosure is not limited to these embodiments. The effects described in the embodiments of the present disclosure are only described as the most suitable effects arising from the present disclosure, which are not limited to the effects of the present disclosure.

The first aspect disclosed in this embodiment provides a method for calculating carbon dioxide emissions executed by a system for calculating carbon dioxide emissions from a transportation means for an item, including the steps of:
managing shipping data for an item;
acquiring transportation base information on at least two transportation bases related to transportation of the item from the shipping data of the item that is acquired from a management system and converting the acquired transportation base information into latitude and longitude information of the transportation bases;
determining a transportation route between the at least two transportation bases based on the converted latitude and longitude information of the transportation bases; and
calculating a transportation distance of the transportation route based on the determined transportation route and calculating carbon dioxide emissions from the transportation means for an item based on the calculated transportation distance, the transportation means operating on the transportation route.

The second aspect disclosed in this embodiment provides the method for calculating carbon dioxide emissions according to the first aspect, further including the steps of: setting a transportation method based on the transportation base information;
setting the transit location in the transportation base information according to the transportation method; and
calculating carbon dioxide emissions based on the transportation method and the transportation base for which the transit base is set.

The third aspect disclosed in this embodiment provides the method for calculating carbon dioxide emissions according to the first aspect, further including the steps of: holding map information and the converted latitude and longitude information of the transportation bases; and
displaying coordinates based on the latitude and longitude information of the transportation bases information on map information and displaying carbon dioxide emissions from delivery of the transportation base near the coordinates.

The fourth aspect disclosed in this embodiment provides a system for calculating carbon dioxide emissions from a transportation means for an item, including:
a management system that manages shipping data for an item;
a conversion unit that acquires transportation base information on at least two transportation bases related to transportation of the item from the shipping data of the item that is acquired from a management system and converts the acquired transportation base information into latitude and longitude information of the transportation bases;
a determination unit that determines a transportation route between the at least two transportation bases based on the converted latitude and longitude information of the transportation bases; and
a calculation unit that calculates a transportation distance of the transportation route based on the determined transportation route and calculates carbon dioxide emissions from the transportation means for an item based on the calculated transportation distance, the transportation means operating on the transportation route.

The fifth aspect disclosed in this embodiment provides the system for calculating carbon dioxide emissions according to the fourth aspect, in which the transportation base information is at least two of a shipping origin, a shipping destination, and a transit base.

The sixth aspect disclosed in this embodiment provides the system for calculating carbon dioxide emissions according to the fifth aspect, in which the transportation base information can identify the transportation base.

The seventh aspect disclosed in this embodiment provides the system for calculating carbon dioxide emissions according to the fourth aspect, further including a transportation method setting unit that sets a transportation method based on the transportation base information; and
a transit base setting unit that sets the transit location in the transportation base information according to the transportation method; in which
the calculation unit calculates carbon dioxide emissions based on the transportation method and the transportation base for which the transit base is set.

The eighth aspect disclosed in this embodiment provides the system for calculating carbon dioxide emissions according to the fourth aspect, in which the transportation base information is acquired in association with the consignor information from the shipping instruction data in which the consignor instructs shipping, and
the carbon dioxide emissions are aggregated for each consignor information.

The ninth aspect disclosed in this embodiment provides the system for calculating carbon dioxide emissions according to the eighth aspect, in which the consignor information is at least one of the name of a consignor, a warehouse in which an item is put, and a store as a shipping destination.

The tenth aspect disclosed in this embodiment provides the system for calculating carbon dioxide emissions according to the fourth aspect, further including a holding unit that holds map information and the latitude and longitude information of the transportation bases that is converted by the conversion unit; and
a display unit that displays coordinates based on the latitude and longitude information of the transportation bases information on map information and displays carbon dioxide emissions from delivery of the transportation base near the coordinates.

The eleventh aspect disclosed in this embodiment provides a computer-readable program causing a system for calculating carbon dioxide emissions from a transportation means for an item to execute the steps of:
managing shipping data for an item;
acquiring transportation base information on at least two transportation bases related to transportation of the item from the shipping data of the item that is acquired from a management system and converting the acquired transportation base information into latitude and longitude information of the transportation bases;
determining a transportation route between the at least two transportation bases based on the converted latitude and longitude information of the transportation bases; and
calculating a transportation distance of the transportation route based on the determined transportation route and calculating carbon dioxide emissions from the transportation means for an item based on the calculated transportation distance, the transportation means operating on the transportation route.

### Description of reference numerals

1: carbon dioxide emissions calculation system,
2: management system,
3: WMS,
4: FMS,
5: map computer,
8: network,
10: carbon dioxide emissions calculation computer,
20: map information,
21: coordinates,
22: carbon dioxide emissions,

## Claims

1. A method for calculating carbon dioxide emissions executed by a system for calculating carbon dioxide emissions from a transportation means for an item, comprising the steps of:
managing shipping data for an item;
acquiring transportation base information on at least two transportation bases related to transportation of the item from the shipping data of the item that is acquired from a management system and converting the acquired transportation base information into latitude and longitude information of the transportation bases;
determining a transportation route between the at least two transportation bases based on the converted latitude and longitude information of the transportation bases; and
calculating a transportation distance of the transportation route based on the determined transportation route and calculating carbon dioxide emissions from the transportation means for an item based on the calculated transportation distance, the transportation means operating on the transportation route.

2. The method for calculating carbon dioxide emissions according to claim 1, further comprising the steps of:
setting a transportation method based on the transportation base information;
setting the transit location in the transportation base information according to the transportation method; and
calculating carbon dioxide emissions based on the transportation method and the transportation base for which the transit base is set.

3. The method for calculating carbon dioxide emissions according to claim 1, further comprising the steps of:
holding map information and the converted latitude and longitude information of the transportation bases; and
displaying coordinates based on the latitude and longitude information of the transportation bases on map information and displaying carbon dioxide emissions from delivery of the transportation base near the coordinates.

4. A system for calculating carbon dioxide emissions from a transportation means for an item, comprising:
a managing system that manages shipping data for an item;
a conversion unit that acquires transportation base information on at least two transportation bases related to transportation of the item from the shipping data of the item that is acquired from a management system and converts the acquired transportation base information into latitude and longitude information of the transportation bases;
a determination unit that determines a transportation route between the at least two transportation bases based on the converted latitude and longitude information of the transportation bases; and
a calculation unit that calculates a transportation distance of the transportation route based on the determined transportation route and calculates carbon dioxide emissions from the transportation means for an item based on the calculated transportation distance, the transportation means operating on the transportation route.

5. The system for calculating carbon dioxide emissions according to claim 4, wherein the transportation base information is at least two of a shipping origin, a shipping destination, and a transit base.

6. The system for calculating carbon dioxide emissions according to claim 5, wherein the transportation base information can identify the transportation base.

7. The system for calculating carbon dioxide emissions according to claim 4, further comprising a transportation method setting unit that sets a transportation method based on the transportation base information; and
a transit base setting unit that sets the transit location in the transportation base information according to the transportation method; in which
the calculation unit calculates carbon dioxide emissions based on the transportation method and the transportation base for which the transit base is set.

8. The system for calculating carbon dioxide emissions according to claim 4, wherein the transportation base information is acquired in association with the consignor information from the shipping instruction data in which the consignor instructs shipping, and
the carbon dioxide emissions are aggregated for each consignor information.

9. The system for calculating carbon dioxide emissions according to claim 8, wherein the consignor information is at least one of the name of a consignor, a warehouse in which an item is put, and a store as a shipping destination.

10. The system for calculating carbon dioxide emissions according to claim 4, further comprising a holding unit that holds map information and the converted latitude and longitude information of the transportation bases; and
a display unit that displays coordinates based on the latitude and longitude information of the transportation bases on map information and displays carbon dioxide emissions from delivery of the transportation base near the coordinates.

11. A computer-readable program causing a system for calculating carbon dioxide emissions from a transportation means for an item to execute the steps of:
managing shipping data for an item;
acquiring transportation base information on at least two transportation bases related to transportation of the item from the shipping data of the item that is acquired from a management system and converting the acquired transportation base information into latitude and longitude information on the transportation base;
determining a transportation route between the at least two transportation bases based on the converted latitude and longitude information of the transportation bases; and
calculating a transportation distance of the transportation route based on the determined transportation route and calculating carbon dioxide emissions from the transportation means for an item based on the calculated transportation distance, the transportation means operating on the transportation route.
